# EUROPEAN PATENT APPLICATION

(11) **EP 4 644 861 A1**
(43) Date of publication of application: **05.11.2025**
(21) Application number: 23911287.3
(22) Date of filing: 13.09.2023
(51) Int. Cl.: G01N 1/31, G01N 33/53

(54) **ACCURACY MANAGEMENT SLIDE, AND METHOD USING SAME FOR INSPECTING AUTOMATIC IMMUNOSTAINING DEVICE**

(30) Priority: 27.12.2022 JP 2022209117
(71) Applicant: HITACHI HIGH-TECH CORPORATION, Tokyo 105-6409 (JP)
(72) Inventor: SASAKI, Taira, Tokyo 100-8280 (JP); MARUYAMA, Masashi, Tokyo 100-8280 (JP); NOBUKI, Shunichirou, Tokyo 100-8280 (JP); MATSUBARA, Shigeki, Tokyo 105-6409 (JP); SAKURAI, Toshinari, Tokyo 105-6409 (JP)
(74) Representative: MERH-IP Matias Erny Reichl Hoffmann Patentanwälte PartG mbB
(86) International application number: PCT/JP2023/033299
(87) International publication number: WO 2024/142503

(57) **Abstract**

Provided is an accuracy management slide that can check the presence or absence of an abnormality in an automatic immunostaining device and estimate a cause of the abnormality if occurs. The slide includes a spot (antigen (-)) not containing an antigen); a spot (fixation (-)/antigen (+)) having no histological fixation applied and containing an antigen; and a spot (fixation (+)/antigen (+)) having histological fixation applied and containing an antigen.

## Description

### Technical Field

The present invention relates to a constitution of an accuracy management slide for managing the accuracy of an inspection apparatus and an inspection method using the device, and particularly relates to a technique effective for managing the accuracy of an automatic immunostaining device for pathological examination.

### Background Art

Pathological examination is a technique for diagnosing the presence or absence and type of lesion by attaching a specimen such as cells or a tissue collected from a patient to a slide glass to prepare a specimen sample and observing the specimen sample at a microscopic level.

In the pathological examination, in order to distinguish a lesion from a colorless specimen, a technique for staining constituent elements of a cell or a tissue is indispensable. One of the main staining techniques for use in pathological examination is immunostaining. The staining technique is used for detecting a specific antigen expressed in a specimen with an antibody reagent. Since localization of the antigen to be examined is visualized, immunostaining is an extremely important technique in pathological examination.

The number of immunostaining cases is increasing year by year, and the demand for an automatic immunostaining device that realizes automatic immunostaining has been increased. Current automatic immunostaining devices realize automation of activation, washing, and staining. Although multiple steps are automated, when an abnormality occurs, it is difficult to determine that the abnormality occurs in which step. To prevent occurrence of an abnormality, day-to-day inspection by the user and periodic inspection by an engineer of a device maker are needed, requiring workload for the user and the engineer.

In connection to this, it is already known to use an accuracy management slide, which makes it possible to check whether the entire process of the automatic immunostaining device normally proceeds or the step where an abnormality occurs. For example, PTL 1 discloses a slide glass having two spots containing a binding substance and a non-binding substance, respectively. When the spot containing a binding substance develops a color and the spot not containing the binding substance does not develop a color, it can be determined that the automatic immunostaining device is normally working. When color patterns except the above pattern are found, it can be determined that an abnormality occurs in the automatic immunostaining device.

### Citation List

### Patent Literature

PTL 1: JP 2020-98097 A

### Summary of Invention

### Technical Problem

However, in the technique disclosed in PTL 1, when an abnormality occurs, it is difficult to determine the type of abnormality.

Accordingly, an object of the present invention is to provide an accuracy management slide that can check the presence or absence of an abnormality in an automatic immunostaining device and estimate a cause of the abnormality if occurs, and provide an inspection method using the slide.

### Solution to Problem

In order to solve the above problems, the present invention is characterized by having a spot (antigen (-)) not containing an antigen, a spot (fixation (-)/antigen (+)) having no histological fixation applied and containing an antigen, and a spot (fixation (+)/antigen (+)) having histological fixation applied and containing an antigen.

The present invention is also directed to a method for inspecting an automatic immunostaining device using an accuracy management slide having the above characteristics, and characterized by checking presence or absence of an abnormality in the automatic immunostaining device and estimating a cause of the abnormality if occurs based on the color pattern of each of the spots described above.

### Advantageous Effects of Invention

According to the present invention, it is possible to realize an accuracy management slide that can check the presence or absence of an abnormality in an automatic immunostaining device and estimate a cause of the abnormality if occurs, and realize an inspection method using the slide.

As a result, it is possible to check whether the entire process normally proceeds or an abnormality occurs during use of an automatic immunostaining device, and estimate a cause of the abnormality if occurs.

In addition, it is possible to detect a sign of an abnormality in the automatic immunostaining device by tracking a change over time.

Problems, constitutions, and effects other than those described above will be clarified by the following description of embodiments.

### Brief Description of Drawings

[FIG. 1] FIG. 1 is a diagram schematically illustrating a minimum constitution of an accuracy management slide according to an embodiment of the present invention.
[FIG. 2] FIG. 2 is a diagram schematically illustrating immunostaining results of the accuracy management slide of FIG. 1.
[FIG. 3] FIG. 3 is a diagram schematically illustrating the accuracy management slide prepared by further adding spots to the slide shown in FIG. 1.
[FIG. 4] FIG. 4 is a diagram schematically illustrating immunostaining results of the accuracy management slide of FIG. 3.
[FIG. 5] FIG. 5 is a diagram schematically illustrating an accuracy management slide prepared by providing four levels to each of the antigen concentration and fixation strength of spots.
[FIG. 6] FIG. 6 is a diagram schematically illustrating immunostaining results of the accuracy management slide of FIG. 5.
[FIG. 7] FIG. 7 is a diagram schematically illustrating results of the accuracy management slide of FIG. 1 immunostained on a daily basis.
[FIG. 8] FIG. 8 is a diagram schematically illustrating results of the accuracy management slide of FIG. 5 immunostained on a daily basis.

### Description of Embodiments

Hereinafter, embodiments of the present invention will be described with reference to the drawings. Note that, in the drawings, like reference numerals are used to designate like structural elements and any further explanation is omitted for brevity's sake.

The accuracy management slide of the present invention can be used for management of immunostaining accuracy. The slide is most suitably used in an automatic immunostaining device by installing it on the device. The accuracy management slide of the present invention is used for immunostaining of specimens.

Immunostaining is a technique for detecting a specific antigen using an antibody. The immunostaining referred to herein is a process including activating a specimen, adding an antibody reagent to prepare a reaction system, performing an antigen-antibody reaction, washing an unreacted antibody reagent, performing a color development reaction, and washing an unreacted color development reagent.

In the accuracy management slide of the present invention, a specimen is placed on a specimen holder section and the specimen and spots can be immunostained on the same slide. In this way, the specimen and the spots can be treated under the same condition. At this time, the color-development pattern of the spots are checked to evaluate the reliability of the stained state of the specimen can be evaluated. In addition, the accuracy management slide of the present invention can be used for checking that the entire process normally proceeds and estimating a cause of an abnormality if occurs.

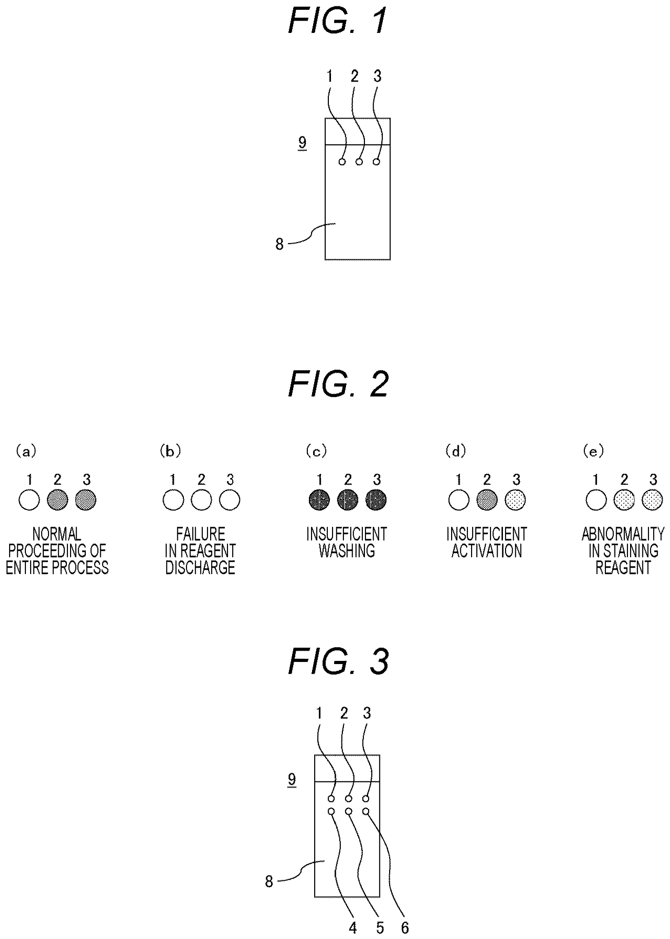

FIG. 1 schematically illustrates a minimum constitution of the accuracy management slide of the present invention.

As shown in FIG. 1, an accuracy management slide 9 of the present invention is constituted of spot 1 (antigen (-)) not containing an antigen, spot 2 (fixation (-)/antigen (+)) having no histological fixation applied and containing an antigen, spot 3 (fixation (+)/antigen (+)) having histological fixation applied and containing an antigen, and a specimen holder section 8. The accuracy management slide 9 of the present invention has at least three types of spots 1 to 3.

The histological fixation used herein refers to chemical treatment performed for protecting a living body-derived specimen from degradation due to autolysis or decay. Generally, a specimen for immunostaining is histologically fixed. As one of the typical histological fixations, a method using an aldehyde compound is known. An antigen in a specimen and a tissue component around the antigen are crosslinked via an aldehyde, with the result that the antigen can be maintained in the conditions close to *in vivo* conditions for a long period of time. In contrast, in the histological fixation, the reacting site of an antigen is blocked, with the result that immunostaining does not proceed normally unless it is activated by, e.g., heat treatment immediately before immunostaining.

When spot 1 (antigen (-)) does not develop a color, it is estimated that immunostaining normally proceeds; the concentration of a staining reagent is insufficient or the activity thereof is insufficient, preparation of a reaction system is unsuccessful; and activation is incomplete. When spot 1 (antigen (-)) develops a strong color, it is estimated that a staining reagent remains.

When spot 2 (fixation (-)/antigen (+)) does not develop a color, it is estimated that preparation of a reaction system is unsuccessful. When spot 2 (fixation (-)/antigen (+)) develops a weak color, it is estimated that the concentration of a staining reagent is insufficient or the activity thereof is insufficient. When spot 2 (fixation (-)/antigen (+)) develops a color, it is estimated that immunostaining normally proceeds; and activation is incomplete. When spot 2 (fixation (-)/antigen (+)) develops a strong color, it is estimated that a staining reagent remains.

When spot 3 (fixation (+)/antigen (+)) does not develop a color, it is estimated that preparation of a reaction system is unsuccessful. When spot 3 (fixation (+)/antigen (+)) develops a weak color, it is estimated that the concentration of a staining reagent is insufficient or the activity thereof is insufficient; and activation is incomplete. When spot 3 (fixation (+)/antigen (+)) develops a color, it is estimated that immunostaining normally proceeds. When spot 3 (fixation (+)/antigen (+)) develops a strong color, it is estimated that a staining reagent remains.

If these spots are used in combination and the correspondence between a color pattern and a type of immunostaining abnormality is found, the abnormality in the automatic immunostaining device can be estimated.

FIG. 2 schematically illustrates immunostaining results of the accuracy management slide 9 of FIG. 1.

For example, as shown in FIG. 2a, when spot 1 (antigen (-)) does not develop a color and spot 2 (fixation (-)/antigen (+)) and spot 3 (fixation (+)/antigen (+)) develop a color, it is estimated that immunostaining normally proceeds. It is estimated that the entire process proceeds normally without abnormality.

As shown in FIG. 2b, when none of spot 1 (antigen (-)), spot 2 (fixation (-)/antigen (+)), and spot 3 (fixation (+)/antigen (+)) develop a color, it is estimated that preparation of a reaction system is unsuccessful. That is, the abnormality is estimated as unsuccessful discharge of a reagent.

As shown in FIG. 2c, when all of spot 1 (antigen (-)), spot 2 (fixation (-)/antigen (+)), and spot 3 (fixation (+)/antigen (+)) develop a strong color, it is estimated that the staining reagent remains. That is, the abnormality is estimated as insufficient washing.

As shown in FIG. 2d, when spot 1 (antigen (-)) does not develop a color; spot 2 (fixation (-)/antigen (+)) develops a color; and spot 3 (fixation (+)/antigen (+)) develop a weak color, it is estimated that activation is incomplete. That is, the abnormality is estimated as insufficient activation.

As shown in FIG. 2e, when spot 1 (antigen (-)) does not develop a color; spot 2 (fixation (-)/antigen (+)) and spot 3 (fixation (+)/antigen (+)) develop a weak color, it is estimated that the concentration of a staining reagent is insufficient or the activity thereof is insufficient. That is, the abnormality is estimated as an abnormality of a staining reagent including deterioration thereof.

As described above, if the color patterns of at least three types of spots are checked, it can be checked that the entire process of immunostaining normally proceeds and that an abnormality is present. If an abnormality is present, the cause thereof can be estimated.

FIG. 3 schematically illustrates the accuracy management slide 9 prepared by further adding spots to the slide shown in FIG. 1.

The accuracy management slide 9 of the present invention prepared by further adding spots to the above three types of spots makes it possible to more specifically estimate the type of an abnormality.

If spot 4 (fixation (+++)/antigen (+)) having excessive histological fixation applied and containing an antigen is added, excessive activation can be estimated.

The excessive histological fixation in the present invention refers to fixation which does not allow recovering of the immunostaining property of the antigen even if activation routinely employed is performed. Specifically, the excessive histological fixation preferably refers to fixation of 50% or more of the amino groups of an antigen. Furthermore, an antigen is excessively activated so as for the antigen not to lose immunoreactivity.

When spot 5 (primary antibody (+)) containing a primary antibody binding to a secondary antibody of an antibody reagent to be used for examination and spot 6 (HRP (+)) containing an enzyme reacting with a coloring reagent to be used for examination are added, details of an abnormality of a staining reagent such as deterioration can be estimated, and further, a mischoice of a primary antibody can be estimated.

When spot (fixation (+++)/antigen (+)) 4 does not develop a color, it is estimated that immunostaining normally proceeds; preparation of a reaction system is unsuccessful; activation is incomplete, the concentration of a primary antibody is insufficient or the activity thereof is insufficient; the concentration of the secondary antibody is insufficient or the activity thereof is insufficient; the concentration of a coloring reagent is insufficient or the activity thereof is insufficient; and a primary antibody is incompatible. When spot 4 (fixation (+++) /antigen (+)) develops a color, it is estimated that activation is excessive. When spot 4 (fixation (+++)/antigen (+)) develops a strong color, it is estimated that a staining reagent remains.

When spot 5 (primary antibody (+)) does not develop a color, it is estimated that preparation of a reaction system is unsuccessful. When spot 5 (primary antibody (+)) develops a weak color, it is estimated that the concentration of the secondary antibody is insufficient or the activity thereof is insufficient, and the concentration of a coloring reagent is insufficient or the activity thereof is insufficient. When spot 5 (primary antibody (+)) develops a color, it is estimated that immunostaining normally proceeds; activation is incomplete; the concentration of a primary antibody is insufficient or the activity thereof is insufficient; a primary antibody is incompatible; and activation is excessive. When spot 5 (primary antibody (+)) develops a strong color, it is estimated that a staining reagent remains.

When spot 6 (HRP (+)) does not develop a color, it is estimated that preparation of a reaction system is unsuccessful. When spot 6 (HRP (+)) develops a weak color, it is estimated that activation is incomplete; and the concentration of a coloring reagent is insufficient; or the activity thereof is insufficient. When spot 6 (HRP (+)) develops a color, it is estimated that the immunostaining proceeds normally; the concentration of a primary antibody is insufficient or the activity thereof is insufficient; the concentration of a secondary antibody is insufficient or the activity thereof is insufficient, the primary antibody is incompatible; and the activation is excessive. When spot 6 (HRP (+)) develops a strong color, it is estimated that a staining reagent remains.

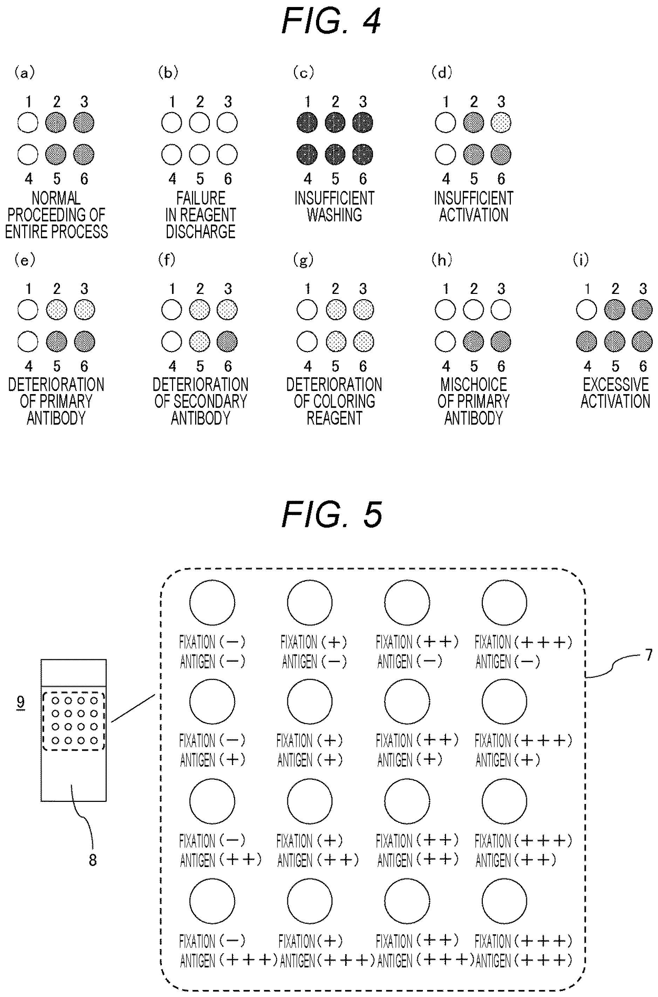

FIG. 4 schematically illustrates immunostaining results of the accuracy management slide 9 of FIG. 3.

For example, as shown in FIG. 4a, when neither spot 1 (antigen (-)) nor spot 4 (fixation (+++)/antigen (+)) develops a color and spot 2 (fixation (-)/antigen (+)); spot 3 (fixation (+)/antigen (+)), spot 5 (primary antibody (+)), and spot 6 (HRP (+)) develop a color, it is estimated that immunostaining normally proceeds. That is, it is estimated that the entire process normally proceed without abnormalities.

As shown in FIG. 4b, when none of spot 1 (antigen (-)), spot 2 (fixation (-)/antigen (+)), spot 3 (fixation (+)/antigen (+)), spot 4 (fixation (+++)/antigen (+)), spot 5 (primary antibody (+)), and spot 6 (HRP (+)) develop a color, it is estimated that preparation of a reaction system is unsuccessful. That is, the abnormality is estimated as unsuccessful discharge of a reagent.

As shown in FIG. 4c, when all of spot 1 (antigen (-)), spot 2 (fixation (-)/antigen (+)), spot 3 (fixation (+)/antigen (+)), spot 4 (fixation (+++)/antigen (+)), spot 5 (primary antibody (+)), and spot 6 (HRP (+)) develop a strong color, it is estimated that the staining reagent remains. That is, the abnormality is estimated as insufficient washing.

As shown in FIG. 4d, when neither spot 1 (antigen (-)) nor spot 4 (fixation (+++)/antigen (+)) develops a color; spot 3 (fixation (+)/antigen (+)) develops a weak color; and spot 2 (fixation (-)/antigen (+)), spot 5 (primary antibody (+)), and spot 6 (HRP (+)) develop a color, it is estimated that activation is incomplete. That is, the abnormality is estimated as insufficient activation.

As shown in FIG. 4e, when neither spot 1 (antigen (-)) nor spot 4 (fixation (+++)/antigen (+)) develops a color; spot 2 (fixation (-)/antigen (+)) and spot 3 (fixation (+)/antigen (+)) develop a weak color; and spot 5 (primary antibody (+)) and spot 6 (HRP (+)) develop a color, it is estimated that the concentration of a primary antibody is insufficient or the activity thereof is insufficient. That is, the abnormality is estimated as deterioration of a primary antibody.

As shown in FIG. 4f, when neither spot 1 (antigen (-)) nor spot 4 (fixation (+++)/antigen (+)) develops a color; spot 2 (fixation (-)/antigen (+)), spot 3 (fixation (+)/antigen (+)) and spot 5 (primary antibody (+)) develop a weak color; and spot 6 (HRP (+)) develops a color, it is estimated that the concentration of a secondary antibody is insufficient or the activity thereof is insufficient. That is, the abnormality is estimated as deterioration of a secondary antibody.

As shown in FIG. 4g, when neither spot 1 (antigen (-)) nor spot 4 (fixation (+++)/antigen (+)) develops a color; and spot 2 (fixation (-)/antigen (+)), spot 3 (fixation (+)/antigen (+)), spot 5 (primary antibody (+)), and spot 6 (HRP (+)) develop a weak color, it is estimated that the concentration of the coloring reagent is insufficient or the activity thereof is insufficient. That is, the abnormality is estimated as deterioration of a coloring reagent.

As shown in FIG. 4h, when none of spot 1 (antigen (-)), spot 2 (fixation (-)/antigen (+)), spot 3 (fixation (+)/antigen (+)), and spot 4 (fixation (+++)/antigen (+)) develop a color; and spot 5 (primary antibody (+)) and spot 6 (HRP (+)) develop a color, it is estimated that the primary antibody is incompatible. That is, the abnormality is estimated as a mischoice of a primary antibody.

As shown in FIG. 4i, when spot 1 (antigen (-)) does not develop a color and spot 2 (fixation (-)/antigen (+)), spot 3 (fixation (+)/antigen (+)), spot 4 (fixation (+++)/antigen (+)), spot 5 (primary antibody (+)), and spot 6 (HRP (+)) develop a color, it is estimated that the fixation (+++) is activated. That is, the abnormality is estimated as excessive activation.

In addition, the accuracy management slide 9 of the present invention can be used for more precisely managing accuracy by providing a plurality of levels of the strength of histological fixation of a spot and the concentration of the antigen contained in the spot.

The types and the number of levels are not particularly limited, but are preferably three or more and six or less in consideration of the area occupied by spots on a slide.

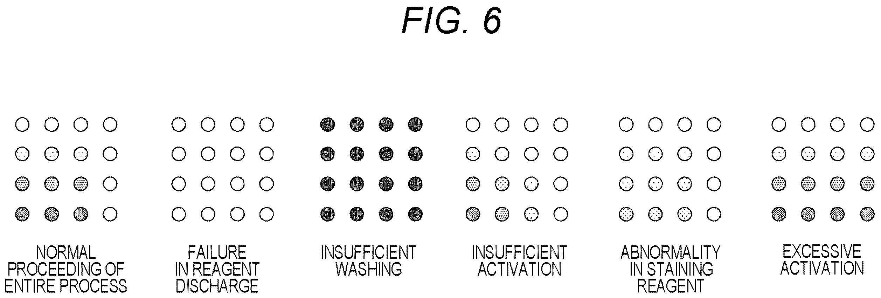

FIG. 5 schematically illustrates the accuracy management slide 9 prepared by providing four levels to each of the antigen concentration and fixation strength of spots. FIG. 6 schematically illustrates immunostaining results of the accuracy management slide 9 of FIG. 5.

For example, as shown in FIG. 5, the accuracy management slide 9 having 16 spots, which is prepared by providing 4 levels of (-), (+), (++), (+++) to each of the strength of histological fixation and the antigen concentration, exhibits color patterns, which change in a stepwise manner, as shown in FIG. 6. Due to the patterns, accuracy can be more precisely managed.

In the accuracy management slide 9 of the present invention, a plurality of sets of spots corresponding to the number of types of antigens may be provided. Alternatively, a plurality of types of antigens may be contained per spot. Other than enhancing versatility for immunostaining, a mischoice of a primary antibody can be estimated.

The accuracy management slide 9 of the present invention, if a fluorescently labeled antigen is used as an antigen, can be used for inspection for quality assurance of the slide itself. The fluorescently labeled antigen can be obtained by reacting a fluorescently labeled reagent with an antigen. The fluorescently labeled antigen can be introduced into a spot in the same manner as in an antigen mentioned above.

The fluorescence intensity of a spot is quantitatively measured by, e.g., a fluorescence microscope, a fluorometer, or a fluorescence imaging device, and the antigen introduced in a spot before use can be visualized. At this time, a quality assurance range is set for the immunostaining intensity. If the immunostaining intensity estimated from the fluorescence intensity based on the calibration curve is excess or deficiency, it can be determined that the accuracy management slide 9 is not suitable in practice. The quality assurance range is appropriately set by forming a calibration curve based on the correlation between the fluorescence intensity and the immunostaining intensity.

The accuracy management slide 9 of the present invention can be used also for detecting a sign of an abnormality present in an automatic immunostaining device.

A sign of an abnormality present in the automatic immunostaining device can be detected by checking a day-to-day change in the color patterns of at least three types of spots.

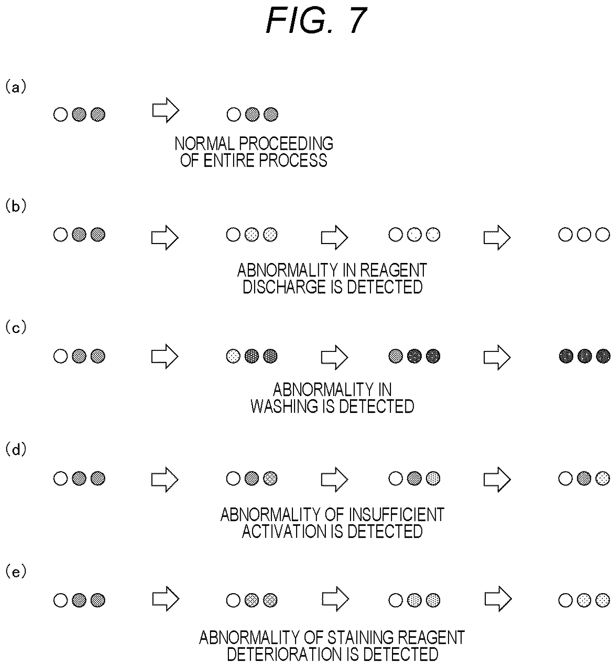

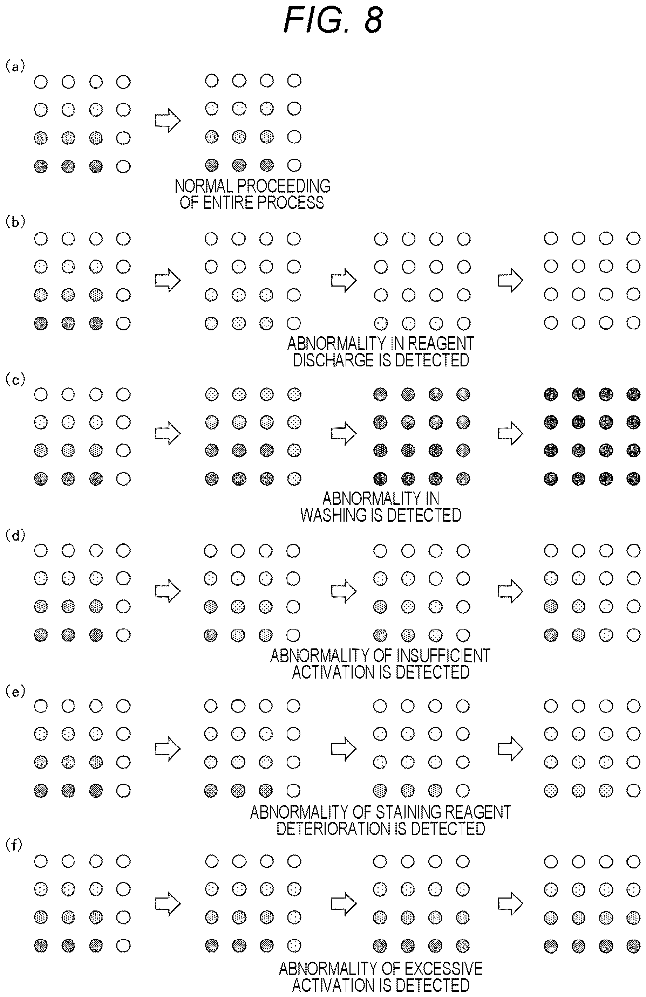

The details of this will be explained below with reference to FIGS. 7 and 8. FIG. 7 schematically illustrates immunostaining results of the accuracy management slide 9 of FIG. 1 on a daily basis. FIG. 8 schematically illustrates immunostaining results of the accuracy management slide 9 of FIG. 5 on a daily basis.

For example, a day-to-day change in the color pattern of spots is checked. If it is found that there is a tendency of the color pattern (exhibiting that the entire process normally proceeds) of FIG. 7a to come closer to any one of the color patterns shown in FIG. 7b, 7c, 7d, or 7e, it can be confirmed that the abnormality corresponding to the color pattern is occurring.

If the color pattern of in FIG. 7a (exhibiting that the entire process normally proceeds) changes day-to-day into the color pattern shown in FIG. 7b, it can be predicted that an abnormality is present in reagent discharge. If the color pattern shown in FIG. 7c is resulted, it can be predicted that an abnormality is present in the washing mechanism. If the color pattern shown in FIG. 7d is resulted, it can be predicted that an abnormality is present in the activation mechanism. If the color pattern shown in FIG. 7e is resulted, it can be predicted that an abnormality is present in the staining reagent. If the tendency of a day-to-day change in color pattern is checked as described above, it is possible to predict an abnormality present in the automatic immunostaining device.

Even when the accuracy management slide 9 of the present invention is used for checking a sign of an abnormality, if a plurality of levels are provided to the strength of histological fixation of a spot and the concentration of the antigen contained in the spot, the sign of an abnormality can be more precisely detected.

For example, a day-to-day change in the color pattern of spots is checked. If it is found that there is a tendency that the color pattern (exhibiting that the entire process normally proceeds) of FIG. 8a to come closer to any one of the color patterns shown in FIG. 8b, 8c, 8d, 8e, or 8f, it can be confirmed that an abnormality corresponding to the color pattern is occurring.

A method for reading the color pattern of the spots constituting the accuracy management slide 9 of the present invention is not particularly limited. The color intensity of the color pattern of spots may be visually read in a qualitative manner and estimation is made but is preferably read in a quantitative manner.

In the case where the color intensity is quantitatively read, there is, e.g., a method of photographing the entire surface of a slide by a camera and analyzing the image; a method of observing each of the spots by a microscope and analyzing the images; a method of measuring chromaticity of each of the spots, or a method of measuring absorbance at a specific wavelength.

For example, in the method of photographing the entire surface of a slide by a camera and analyzing the image, the color information for each coordinate on the image is taken into an output device to quantify color pattern. In this case, in order to compare color intensity, it is preferable that color-sample spots already colored are set up on the accuracy management slide 9.

Note that, to avoid an effect from a photographing environment, the slide glass is fixed on a predetermined position and photographing is performed in a dark box by applying a predetermined light.

For example, in a method of observing each of the spots by a microscope and analyzing the images or a method of measuring chromaticity of each of the spots, the RGB values of the spots are placed in the RGB spatial coordinate system before and after immunostaining, and the distance between the two points can be determined as the color intensity.

Alternatively, for example, in a method of measuring the absorbance at a specific wavelength, the absorbance of a dye used as a coloring reagent for immunostaining can be used as the color intensity. The absorbance of the dye may be measured at two wavelengths, and a difference or a ratio between the two absorbances may be used as the color intensity. When the absorbance at a specific wavelength is measured, the light source emits light may be a monochromatic light source, a plurality of monochromatic light sources, or a light source obtained by dispersing white light.

When a sign of an abnormality is detected by the accuracy management slide 9 of the present invention, it is preferable to quantitatively read the color pattern of spots.

The detection of a sign of an abnormality can be performed by recording a day-to-day change in quantitative amount or inclination of the change thereof and comparing with educational data prepared in advance.

The type of abnormality can be estimated by checking which color pattern on the educational data a pattern of interest comes closer. The educational data can be prepared in advance by quantifying the color intensities when various types of abnormalities are intentionally given.

In addition, in a case where a sign of an abnormality is detected, for example, if the abnormality relates to a reagent, an alert is issued to the user, and if a sign of an abnormality relates to a device, an alert is issued to an engineer of a device manufacturer. In this way, it is possible to quickly respond to the sign of an abnormality.

It is preferable that the photographing function, function of quantifying the color intensity of an image by image analysis, function of comparing quantitative values with the educational data to predict an abnormality, and function of issuing an alert depending on the type of predictive abnormality as mentioned above can be installed in an automatic immunostaining device or equipped as an accessory facility.

The accuracy management slide 9 of the present invention can be realized based on design guidelines described below.

As described with reference to FIG. 1, the accuracy management slide 9 of the present invention is constituted of at least three types of spots including spot 1 (antigen (-)) not containing an antigen, spot 2 (fixation (-)/antigen (+)) having no histological fixation applied and containing an antigen, and spot 3 (fixation (+)/antigen (+)) having histological fixation applied and containing an antigen.

The antigen contained in the spots constituting the accuracy management slide 9 of the present invention is not particularly limited.

Examples of the type of antigen include, but are not particularly limited to, antigenic proteins that should be checked as analytes in a pathological examination or a peptides or amino acids having partially homologous sequences to the antigenic proteins or an oligomer of an amino acid.

Examples of the antigenic proteins include Ki-67, p53, CK, D2-40, CD20, CD3, ER, PGR, HER2, CD34, CD79, CD10, αSMA, S100, CD68, CK7, BCL2, CD56, p63, CD5, CK20, Synaptophysin, Vimentin, Chromogranin A, TTF-1, Desmin, CK-HMW, CD31, EMA, CD117, Cyclin D1, CD30, Myeloperoxidase, CD4, and CEA. The antigenic proteins may be naturally occurring proteins or recombinant proteins.

In the method for histologically fixing the spots constituting the accuracy management slide 9 of the present invention, formaldehyde or glutaraldehyde is preferably used. These compounds may be used in combination, or another aldehyde compound may be used. When histological fixation is performed with formaldehyde or glutaraldehyde, the state of the spot can be close to that of an actual specimen.

The method for determining the levels of histological fixation of the spots constituting the accuracy management slide 9 of the present invention is not particularly limited.

Examples of the spots that can be used include a spot (fixation (-)) not subjected to fixation with a formaldehyde solution; a spot (fixation (+)) subjected to soaking in a 4% formaldehyde solution (pH7.4) for 8 hours; a spot (fixation (++)) subjected to soaking in a 4% formaldehyde solution (pH7.4) for 3 days; and a spot (fixation (+++)) subjected to soaking in a 4% formaldehyde solution (pH7.4) for 1 month.

The method for determining the levels of the antigen concentration of the spots constituting the accuracy management slide 9 of the present invention is not particularly limited.

Examples of the spots that can be used include a spot (antigen (-)) that is not subjected to fixation with a formaldehyde solution; a spot (antigen (+)) that is subjected to a fixation reaction using a 25 ug/mL antigen-protein solution; a spot (antigen (++)) subjected to a fixation reaction using a 50 µg/mL antigen-protein solution; and a spot (antigen (+++)) subjected to a fixation reaction using a 100 µg/mL antigen-protein solution.

The main composition of the spots constituting the accuracy management slide 9 of the present invention is preferably an amine-containing polymer compound. The amine-containing polymer compound has a function of distributing amino groups in the vicinity of an antigen. When the antigen and the amino groups in the vicinity thereof are histologically fixed, the state of the spot can be close to that of an actual specimen. The amine-containing polymer compound is constituted of at least one of a protein, a peptide, a polysaccharide, a vinyl synthetic polymer, and an allyl synthetic polymer. The amine-containing polymer compound has a plurality of amino groups for realizing sufficient histological fixation of an antigen, and can chemically or physically fix the antigen.

Examples of a material satisfying these conditions include a material composed of a protein such as serum albumin, ovalbumin, gelatin, collagen, and casein of various animals; a material composed of a peptide such as polylysine and polyornithine; a material composed of a polysaccharide such as chitosan and chitin; a vinyl synthetic polymer such as polyvinylamine; an allyl synthetic polymer such as a compound having polyallylamine or polyallylamine as a partial structure; and a copolymer having a part of these structures.

Of these, serum albumin is particularly preferable in consideration of spot molding, suppression of non-specific adsorption to e.g., a staining reagent, and availability, but the material is not limited to the serum albumin. When a living-body derived material such as a protein is used, the material may be a naturally occurring material or a recombinant material.

The area of each of spots constituting the accuracy management slide 9 of the present invention is preferably 1 mm² or more and 1000 mm² or less, and more preferably 1 mm² or more and 500 mm² or less. In consideration that a plurality of spots need to be provided on a slide, and that easy-observation during pathological examination and productivity are achieved at the same time, the area per spot is more preferably 5 mm² or more and 100 mm² or less.

The thickness of the spots constituting the accuracy management slide 9 of the present invention is preferably 0.5 µm or more and 500 µm or less. In consideration that the thickness of the specimen to be used for the pathological examination is generally about 5 µm, that the height of the liquid level of a reagent during immunostaining is generally up to about 100 µm, and productivity, the thickness of the spot is more preferably 1 µm or more and 100 µm or less.

The shape of the spot constituting the accuracy management slide 9 of the present invention is not particularly limited. A circular shape, an elliptical shape, a polygonal shape, a rectangular shape, a linear shape, and the like can be appropriately set depending on the preparation method and an intended inspection, but in consideration of uniform immunostaining, a circular shape or an elliptical shape is more preferable.

The method for preparing the accuracy management slide 9 of the present invention is not particularly limited.

Examples of the method include a method including solidifying a precursor solution of a spot into a cylindrical solid matter by a physical method or a chemical method, slicing the solidified product and attaching the slices onto a slide; a method including applying a precursor solution of a spot to a plate-like mold made of fluorine, solidifying the solution by a physical method or a chemical method, cutting the mold into a spot-form pieces, and attaching the pieces onto a slide; and a method including spraying a precursor solution of a spot to a slide like inkjet printing, and solidifying the solution by a physical method or a chemical method.

A physical method or a chemical method for solidifying the precursor solution of a spot is not particularly limited. A solidification method to be used varies depending on the properties of the compound to be used.

For example, when serum albumin is used as a precursor solution of a spot, if an aqueous solution of serum albumin is subjected to strong heating at about 55°C to 100°C or ethanol is added to the solution, a gel-like product solidified by a physical method can be obtained.

Alternatively, when gelatin or collagen is used as a precursor solution of a spot, if a chemical crosslinking agent is added to gelatin or collagen, a gel-like product solidified by a chemical method can be obtained.

A method for introducing an antigen into spots constituting the accuracy management slide 9 of the present invention is not particularly limited.

Examples of the method include a method including solidifying a precursor solution of a spot into a cylindrical solid matter followed by introducing an antigen solution by a physical method or a chemical method, and a method including mixing a precursor solution of a spot and an antigen solution in advance and introducing the mixture by a physical method or a chemical method.

The physical method or chemical method for introducing the antigen into the spot is not particularly limited.

An introduction method to be used can be selected depending on the characteristics of the precursor solution of the spot to be used.

For example, when serum albumin is used as a precursor solution of a spot, if an antigen solution and serum albumin are mixed in advance and subjected to strong heating at about 55°C to 100°C or ethanol is added, a gel-like product having the antigen solidified by a physical method can be obtained.

Alternatively, if a gel-like solid matter prepared by solidifying a serum albumin solution into a cylinder shape is soaked in a solution of a chemical crosslinking agent and an antigen, a gel-like solidified product having an antigen solidified by a chemical method can be obtained.

The chemical crosslinking agent can be selected depending on the compound to be used. When serum albumin, gelatin, or collagen is used, examples of the chemical crosslinking agent to be applied include DMT-MM, glutaraldehyde, dimethyl suberimidate, genipin, (benzotriazol-1-yloxy)tris(dimethylamino)phosphonium, benzotriazol-1-yloxytris(pyrrolidino)phosphoniumhexafluorophosphate, a polyfunctional ethylene glycol polymer and a carbodiimide compound.

Hereinafter, embodiments of the present invention will be more specifically described. However, the present invention is not limited to the following Examples.

### Example 1

In Example 1, the accuracy management slide 9 of the present invention was produced by the following method.

Bovine serum albumin (10 wt% solution) was prepared and poured in a cylindrical mold of 5 mm in diameter. The mold was heated at 90°C to prepare a gel-like solidified product of bovine serum albumin.

The gel was soaked in a 0.1 wt% glutaraldehyde solution and allowed to stand at room temperature for 3 hours.

The gel was soaked in a 100 µg/mL Recombinant Human Vimentin (labeled with Alexa Fluor 680) solution (pH7.4), and allowed to stand at room temperature overnight.

The gel was soaked in a 4% formaldehyde solution (pH7.4) and allowed to stand at room temperature for 8 hours. The gel was soaked in ethanol/water = 70 v/30 v% and allowed to stand overnight, then soaked in ethanol/water = 95 v/5 v%, allowed to stand for 1 hour, then soaked in ethanol, and allowed to stand for 3 hours.

The gel was soaked in xylene/ethanol = 70 v/30 v% and allowed to stand for 1 hour, then soaked in xylene/ethanol = 95 v/5 v%, allowed to stand for 1 hour, then soaked in xylene, and allowed to stand for 3 hours.

The gel was soaked in a 50 wt% paraffin xylene solution and allowed to stand at 60°C for 1 hour. The resultant gel was soaked in paraffin, soaked at 60°C for 3 hours, and then cooled at 4°C to prepare a paraffin-embedded gel. The paraffin-embedded gel was sliced by a microtome to prepare spots (fixation (+)/antigen (+)) (corresponding to spot 3 in FIG. 1) of the paraffin-embedded gel thin film.

Spots (antigen (-)) (corresponding to spot 1 in FIG. 1) and spots (fixation (-)/antigen (+)) (corresponding to spot 2 in FIG. 1) were prepared in the same manner as above except that a PBS solution (pH7.4) was used in place of each of the 4 wt% formaldehyde solution (pH7.4) and the Recombinant Human Vimentin (labeled with Alexa Fluor 680) solution (pH7.4).

The three types of spots were attached per slide to prepare accuracy management slides 9. The area of each of the spots was 20 mm², and the thickness thereof was 4 µm.

### Example 2

In Example 2, the accuracy management slide 9 of the present invention was prepared by a method different from that in Example 1.

Bovine serum albumin (10 wt% solution) was prepared and poured in a plate-like mold made of fluorine up to a height of 200 µm. The mold was heated at 90°C to prepare a gel-like thin film of bovine serum albumin.

A 0.1% glutaraldehyde solution was added dropwise to the mold and allowed to stand at room temperature for 3 hours.

A 100 µg/mL Recombinant Human Vimentin (labeled with Alexa Fluor 680) solution (pH7.4) was added dropwise to the mold, and the mold was allowed to stand at room temperature overnight.

The gel thin film was soaked in a 4% formaldehyde solution (pH7.4) and allowed to stand at room temperature for 8 hours.

The gel thin film was cut into a size of 5 mm × 5 mm to prepare spots (fixation (+)/antigen (+)) (corresponding to spot 3 in FIG. 1).

Spots (antigen (-)) (corresponding to spot 1 in FIG. 1) and spots (fixation (-)/antigen (+)) (corresponding to spot 2 in FIG. 1) were prepared in the same manner as above except that a PBS solution (pH7.4) was used in place of each of the 4 wt% formaldehyde solution (pH7.4) and the Recombinant Human Vimentin (labeled with Alexa Fluor 680) solution (pH7.4).

The three types of spots were attached per slide coated with an antistripping agent to prepare accuracy management slides 9. The area of each of the spots was 25 mm², and the thickness thereof was 20 µm.

### Example 3

In Example 3, in order to evaluate whether the normal proceeding of immunostaining can be estimated by the accuracy management slide 9 prepared in Example 1, normal immunostaining was performed by an automatic immunostaining device. The staining intensity of a spot (fixation (+)/antigen (+)) at this time was standardized as 100.

The staining intensity was 5 for a spot (antigen (-)), 110 for a spot (fixation (-)/antigen (+)), and 100 for a spot (fixation (+)/antigen (+)).

The color pattern had a tendency shown in FIG. 2a. It was confirmed that normal proceeding of immunostaining can be estimated.

### Example 4

In Example 4, in order to evaluate whether an abnormality in washing can be estimated by the accuracy management slide 9 produced in Example 1, immunostaining was performed by an automatic immunostaining device while intentionally adding an abnormality in washing.

Only the washing step was manually performed by soaking the film in 100 mL of pure water for 1 second.

The staining intensity was 200 for a spot (antigen (-)), 250 for spot (fixation (-)/antigen (+)), and 250 for a spot (fixation (+)/antigen (+)). The color pattern had a tendency shown in FIG. 2c. It was confirmed that the abnormality in washing can be estimated.

### Example 5

In Example 5, in order to evaluate whether an abnormality in activation can be evaluated by the accuracy management slide 9 prepared in Example 1, immunostaining was performed by an automatic immunostaining device while intentionally adding an abnormality in activation. Only the activation step was manually performed by applying heat at 40°C for 60 minutes.

The staining intensity was 5 for a spot (antigen (-)), 100 for a spot (fixation (-)/antigen (+)), and 20 for a spot (fixation (+)/antigen (+)). The color pattern had a tendency shown in FIG. 2d. From this, it was confirmed that an abnormality of insufficient activation can be estimated.

### Example 6

In Example 6, in order to evaluate whether an abnormality in a staining reagent can be estimated by the accuracy management slide 9 prepared in Example 1, immunostaining was performed by an automatic immunostaining device while intentionally adding an abnormality to the staining reagent. Staining was performed using an antibody reagent stored at normal temperature for 3 months.

The staining intensity was 5 for a spot (antigen (-)), 50 for a spot (fixation (-)/antigen (+)), and 50 for a spot (fixation (+)/antigen (+)). The color pattern had a tendency shown in FIG. 2e, and it was confirmed that the abnormality in the staining reagent can be estimated.

### Example 7

In Example 7, it was verified whether a sign of an abnormality in the automatic immunostaining device can be detected by the accuracy management slide 9 prepared in Example 1. Immunostaining was performed by an automatic immunostaining device once a day for 30 days, and the immunostaining intensity was measured.

The immunostaining intensity on day 0 was 5 for a spot (antigen (-)), 110 for (fixation (-)/antigen (+)), and 100 for a spot (fixation (+)/antigen (+)).

The immunostaining intensity on day 10 was 5 for a spot (antigen (-)), 105 for a spot (fixation (-)/antigen (+)), and 95 for a spot (fixation (+)/antigen (+)).

The immunostaining intensity on day 20 was 5 for a spot (antigen (-)), 100 for a spot (fixation (-)/antigen (+)), and 90 for a spot (fixation (+)/antigen (+)).

The immunostaining intensity on day 30 was 5 for a spot (antigen (-)), 95 for a spot (fixation (-)/antigen (+)), and 85 for a spot (fixation (+)/antigen (+)).

In this case, the tendency shown in FIG. 7e was confirmed. Thus, a sign of an abnormality of deterioration of the staining reagent can be detected.

Note that the present invention is not limited to the embodiments mentioned above, and includes various modifications. For example, Examples have been described in detail for providing a simple explanation of the present invention, and are not necessarily limited to those having all the constitutions described. In addition, a part of the constitution of an embodiment can be replaced by the constitution of another embodiment. Alternatively, to the constitution of an embodiment, the constitution of another embodiment can be added. In addition, another constitution may be added, deleted or replaced to, from or for a part of the constitution of each of Examples.

### Reference Signs List

1 spot (antigen (-)) not containing an antigen
2 spot (fixation (-)/antigen (+)) having no histological fixation applied and containing an antigen
3 spot (fixation (+)/antigen (+)) having histological fixation applied, and containing an antigen
4 spot (fixation (+++)/antigen (+)) having excessive histological fixation applied and containing an antigen
5 spot containing a primary antibody that binds to secondary antibody of an antibody reagent to be used for examination (primary antibody (+))
6 spot (HRP (+)) containing an enzyme that reacts with a coloring reagent to be used for examination
7 display unit (indicator)
8 specimen holder section
9 accuracy management slide

## Claims

1. An accuracy management slide comprising:
a spot (antigen (-)) not containing an antigen;
a spot (fixation (-)/antigen (+)) having no histological fixation applied and containing an antigen; and
a spot (fixation (+)/antigen (+)) having histological fixation applied and containing an antigen.

2. The accuracy management slide according to claim 1, comprising at least either of a plurality of spots to which histological fixation is applied at a plurality of levels of strength and a plurality of spots containing an antigen at a plurality of levels of concentration.

3. The accuracy management slide according to claim 2, comprising:
spots (fixation (+++)/antigen (+)) having excessive histological fixation applied and containing an antigen;
a spot (primary antibody (+)) containing a primary antibody binding to a secondary antibody of an antibody reagent to be used for examination; and
a spot (HRP (+)) containing an enzyme reacting with a coloring reagent to be used for examination.

4. The accuracy management slide according to claim 3, wherein the excessive histological fixation refers to fixation of 50% or more of amino groups of the antigen.

5. The accuracy management slide according to claim 1, comprising color sample spots for comparing color intensity with each of the spots.

6. The accuracy management slide according to claim 1, wherein the histological fixation with formaldehyde or glutaraldehyde is applied to each of the spots.

7. The accuracy management slide according to claim 1, wherein each of the spots has an amine-containing polymer compound as a main composition.

8. The accuracy management slide according to claim 7, wherein the amine-containing polymer compound contains at least one of a protein, a peptide, a polysaccharide, a vinyl synthetic polymer, and an allyl synthetic polymer.

9. The accuracy management slide according to claim 7, wherein
the amine-containing polymer compound contains a protein, and
the protein is any one of serum albumin, ovalbumin, gelatin, collagen, and casein.

10. The accuracy management slide according to claim 7, wherein
the amine-containing polymer compound contains a peptide, and
the peptide is either polylysine or polyornithine.

11. The accuracy management slide according to claim 7, wherein
the amine-containing polymer compound contains a polysaccharide, and
the polysaccharide is either chitosan or chitin.

12. The accuracy management slide according to claim 7, wherein
the amine-containing polymer compound contains a vinyl synthetic polymer, and
the vinyl synthetic polymer is polyvinylamine.

13. The accuracy management slide according to claim 7, wherein
the amine-containing polymer compound contains an allyl synthetic polymer, and
the allyl synthetic polymer is polyallylamine or a compound having polyallylamine as a partial structure.

14. The accuracy management slide according to claim 1, wherein
the antigen is any one of Ki-67, p53, CK, D2-40, CD20, CD3, ER, PGR, HER2, CD34, CD79, CD10, αSMA, S100, CD68, CK7, BCL2, CD56, p63, CD5, CK20, Synaptophysin, Vimentin, Chromogranin A, TTF-1, Desmin, CK-HMW, CD31, EMA, CD117, Cyclin D1, CD30, Myeloperoxidase, CD4, and CEA.

15. The accuracy management slide according to claim 1, wherein an area of each of the spots is 1 mm² or more and 1000 mm² or less.

16. The accuracy management slide according to claim 1, wherein a thickness of each of the spots is 0.5 µm or more and 500 µm or less.

17. The accuracy management slide according to claim 1, wherein the antigen is labeled with a fluorescent molecule.

18. A method for inspecting an automatic immunostaining device using the accuracy management slide according to claim 1, comprising checking presence or absence of an abnormality in the automatic immunostaining device based on a color pattern of each of the spots; and estimating a cause of the abnormality if occurs.

19. The method for inspecting an automatic immunostaining device according to claim 18, wherein
a sign of an abnormality in the automatic immunostaining device is detected based on a day-to-day change in the color pattern of each of the spots.
